# EUROPÄISCHE PATENTANMELDUNG

(11) **EP 3 316 353 A1**
(43) Veröffentlichungstag der Anmeldung: **02.05.2018**
(21) Anmeldenummer: 16195976.2
(22) Anmeldetag: 27.10.2016
(51) Int. Cl.: H01M 4/04, H01M 2/16, H01M 10/0525

(54) **BATTERIEZELLE MIT STRUKTURIERTEM AKTIVMATERIAL**

(71) Anmelder: ROBERT BOSCH GMBH, 70442 Stuttgart (DE); Lithium Energy and Power GmbH & Co. KG, 70469 Stuttgart (DE)
(72) Erfinder: Deromelaere, Gaetan, 70806 Kornwestheim (DE); Wille, Christopher, 70563 Stuttgart (DE); Friedrich, Marco, 71638 Ludwigsburg (DE); Klinsmann, Markus, 70195 Stuttgart (DE); Liebenow, Cornelius, 70372 Stuttgart (DE)

(57) **Zusammenfassung**

Die Erfindung betrifft eine Batteriezelle, insbesondere eine Lithium-Ionen-Batteriezelle, mit einer Kathode (3), umfassend ein Kathoden-Aktivmaterial (333) und mit einer Anode (1), umfassend ein Anoden-Aktivmaterial (111), wobei das Kathoden-Aktivmaterial (333) und/oder das Anoden-Aktivmaterial (111) derart strukturiert ist, dass sich Hohlräume (4) zwischen zusammenhängenden Kathoden-Aktivmaterial-Bereichen (333a) und/oder zwischen zusammenhängenden Anoden-Aktivmaterial-Bereichen (111a) befinden, welche die zusammenhängenden Kathoden-Aktivmaterial-Bereiche (333a) und/oder die zusammenhängenden Anoden-Aktivmaterial-Bereiche (111a) räumlich voneinander trennen, und wobei die Hohlräume (4) zumindest teilweise mit einem elektrisch isolierenden Material (5) aufgefüllt sind.

## Beschreibung

Die Erfindung bezieht sich auf eine Batteriezelle, eine Batterie umfassend die Batteriezelle sowie auf die Verwendung der Batterie nach dem Oberbegriff der unabhängigen Ansprüche.

### Stand der Technik

Eine Batteriezelle ist ein elektrochemischer Energiespeicher, der bei seiner Entladung die gespeicherte chemische Energie durch eine elektrochemische Reaktion in elektrische Energie umwandelt. Es zeichnet sich ab, dass in der Zukunft sowohl bei stationären Anwendungen, wie Windkraftanlagen, in Kraftfahrzeugen, die als Hybrid- oder Elektrokraftfahrzeuge ausgelegt sind, wie auch bei Elektronikgeräten neue Batteriesysteme zum Einsatz kommen werden, an die sehr hohe Anforderungen bzgl. Zuverlässigkeit, Sicherheit, Leistungsfähigkeit und Lebensdauer gestellt werden. Aufgrund ihrer großen Energiedichte werden insbesondere Lithium-Ionen-Batterien als Energiespeicher für elektrisch angetriebene Kraftfahrzeuge verwendet.

In der US 8920522 B2 ist ein Aktivmaterial einer negativen Elektrode offenbart, wobei die Oberfläche des Aktivmaterials ein unebenes Muster aufweist, sodass die Oberfläche der Aktivmaterialschicht vergrößert ist.

Die US 8685560 B2 offenbart Subzellen, wobei jede Subzelle mehrere Elektrolytschichten aufweist sowie eine oder mehrere zumindest teilweise mit Aktivmaterial bedeckte leitende Strukturen, welche Durchführungen aufweisen. Offenbarung der Erfindung

Erfindungsgemäß wird eine Batteriezelle, insbesondere eine Lithium-Ionen-Batteriezelle mit einer Kathode, umfassend ein Kathoden-Aktivmaterial und mit einer Anode, umfassend ein Anoden-Aktivmaterial, sowie eine Batterie und deren Verwendung mit den kennzeichnenden Merkmalen der unabhängigen Ansprüche bereitgestellt.

Lithiumionen-Batteriezellen umfassen zumindest eine Anode und zumindest eine Kathode, welche Lithiumionen reversibel ein- und auslagern können. Des Weiteren umfassen Lithiumionen-Batteriezellen zumindest einen Separator, der die Anode und die Kathode sowohl räumlich als auch elektrisch voneinander trennt. Die Anode, der Separator und die Kathode können ineinander aufgewickelt sein oder aufeinander gestapelt vorliegen. Die Kathode umfasst beispielsweise eine Kathodenträgerfolie, welche elektrisch leitend ausgeführt ist und beispielsweise Aluminium umfasst. Auf die Kathodenträgerfolie ist das Kathoden-Aktivmaterial, beispielsweise eine Kombination verschiedener Lithium-Metall-Oxide, zumindest teilweise aufgebracht.
Die Anode umfasst beispielsweise eine Anodenträgerfolie, welche elektrisch leitend ausgeführt ist und beispielsweise Kupfer umfasst. Auf die Anodenträgerfolie ist das Anoden-Aktivmaterial, welches beispielsweise auf natürlichen und/oder synthetischen Graphiten basiert, zumindest teilweise aufgebacht.
Das Material des Separators umfasst beispielsweise ein Polyolefin, insbesondere ein Polypropylen und/oder ein Polyethylen, ein fluoriertes Polyolefin, ein Polyimid, ein Polyamid, ein Alkan, ein Polytetrafluorethylen, ein Polyvinylidenfluorid und/oder ein Polyethylenterephthalat.
Damit Ein- und Auslagerungsvorgänge von Lithium-Ionen in den Elektroden, also der Anode und der Kathode, stattfinden können, wird ein Lithiumionen-Leiter benötigt. Dieser wird in Form eines Elektrolyten bereitgestellt.
Der Elektrolyt umfasst beispielsweise eine Mischung von azyklischen
Carbonaten (zum Beispiel Ethyl-Methyl-Carbonat, Dimethylcarbonat oder Diethlycarbonat) oder zyklischen Carbonaten (zum Beispiel Ethylencarbonat oder Propylencarbonat) in der ein Leitsalz, beispielsweise Lithium-HexaFluorophosphat (LiPF₆), Lithiumperchlorat (LiClO₄), Lithiumhexafluoroarsenat (LiAsF6) oder Lithiumtetrafluoroborat (LiBF4), gelöst ist.
Während des Ladens von Lithiumionen-Zellen wandern Lithiumionen von der Kathode durch den Elektrolyten zur Anode und werden in diese eingelagert. Gleichzeitig wandern Elektronen über einen externen Kreislauf ebenfalls von der Kathode zur Anode. Beim Entladen von Lithiumionen-Zellen laufen diese Vorgänge in umgekehrter Richtung ab, sodass Lithiumionen von der Anode zur Kathode wandern und dort in diese eingelagert werden.

Durch einen Unfall, beispielsweise einen Aufprall der Batterie, durch sehr hohe oder tiefe Temperaturen oder bei einer Überladung oder Tiefenentladung oder bei Kontaminationen in der Batteriezelle, beispielsweise mit Metallpartikeln welche bei der Herstellung ungewollt in die Batteriezelle gelangt sind, kann die Temperatur im Inneren der Batteriezelle stark ansteigen. Ist ein solcher Temperaturanstieg einmal in Gang gesetzt ist dieser sehr schwer zu stoppen. Hohe Temperaturen in der Batteriezelle führen beispielsweise dazu, dass sich der Elektrolyt zersetzt oder dass der Separator schrumpft. Solche Sicherheitsrisiken führen beispielsweise zu Gasbildung und explosionsartigem Freisetzen des Gases sowie zu einem Kurzschluss. Um solche Reaktionen zu unterbinden ist es notwendig entsprechende Situationen frühzeitig zu erkennen und entweder den Ionenfluss oder den Fluss des elektrischen Stroms unverzüglich zu unterbrechen.
Um die Sicherheit von Batteriezellen zu untersuchen kommt beispielsweise der sogenannte Nagel-Penetrationstest zum Einsatz, bei welchem absichtlich ein Nagel in die Batteriezelle gerammt wird, sodass der Nagel sowohl die Anode, den Separator als auch die Kathode durchbohrt. Auf diese Weise werden diese Komponenten der Batteriezelle stark beschädigt. Diese Situation simuliert beispielsweise einen starken inneren Kurzschluss der Batteriezelle. Nun können die Reaktionen, die infolge der beschädigten Bereiche stattfinden, beobachtet und analysiert werden. In der stark beschädigten Region der Batteriezelle, welche sich um den Nagel herum befindet, liegt nur noch ein kleiner elektrischer Widerstand vor, wodurch an dieser Stelle ein sehr hoher Strom fließt. Dies wiederum verursacht ein starkes Erwärmen der Zelle, was eine Temperatursteigerung in der Batteriezelle zur Folge hat.

Erfindungsgemäß sind das Kathoden-Aktivmaterial und/oder das Anoden-Aktivmaterial derart strukturiert, dass sich Hohlräume zwischen zusammenhängenden Kathoden-Aktivmaterial-Bereichen und/oder zwischen zusammenhängenden Anoden-Aktivmaterial-Bereichen befinden, welche die zusammenhängenden Kathoden-Aktivmaterial-Bereiche und/oder die zusammenhängenden Anoden-Aktivmaterial-Bereiche räumlich voneinander trennen. Hierbei sind die Hohlräume zumindest teilweise mit einem elektrisch isolierenden Material aufgefüllt. Die mit elektrisch isolierendem Material aufgefüllten Hohlräume zwischen zusammenhängenden Kathoden-Aktivmaterial-Bereichen und/oder zwischen zusammenhängenden Anoden-Aktivmaterial-Bereichen bieten den Vorteil, dass der Nagel beim Nagelpenetrationstest sehr wahrscheinlich auch eben diese Bereiche durchstößt, und nicht nur Aktivmaterial-Bereiche. Vorteilhaft hierbei ist, dass der Schaden des Elektrodenverbundes minimiert ist, da nur die beschädigten Aktivmaterial-Bereiche ins Gewicht fallen und nicht alle an den Nagel angrenzenden Bereiche. Besonders vorteilhaft hierbei ist, dass der elektrische Widerstand in Bereichen des Elektrodenverbundes um den Nagel in Summe höher ist, da nur in den durchstoßenen Aktivmaterial-Bereichen Strom fließen kann, nicht aber in den durchstoßenen Hohlräumen mit elektrisch isolierendem Material. Durch den, im Vergleich zu Elektrodenverbunden mit durchgehendem Aktivmaterial, höheren elektrischen Widerstand um den von dem Nagel durchstoßenen Bereich ist der Stromfluss um den Nagel merklich minimiert. Dadurch ist die elektrische Verlustleistung der Batteriezelle deutlich geringer als bei Batteriezellen mit durchgehendem Aktivmaterial und die Temperatur um die beschädigte Stelle steigt weniger stark an. Dies ist ein entscheidender Vorteil, denn wenn die Temperatur unter einem kritischen Wert bleibt so ist die Wahrscheinlichkeit eines thermischen Durchgehens der Batteriezelle deutlich verringert. Ein thermisches Durchgehen bezeichnet die Überhitzung der Batteriezelle aufgrund eines sich selbst verstärkenden Erhitzungsprozesses, welcher in der Regel die Zerstörung der Batteriezelle zur Folge hat. Weiterhin vorteilhaft ist, dass die Temperatur im Vergleich zu Batteriezellen mit durchgehenden Aktivmaterial langsamer ansteigt, sodass beispielsweise weitere Sicherheitsmechanismen, wie beispielsweise Schnellentladeeinrichtungen im Notfall mehr Zeit haben um zu agieren. Eine solche Schnellentladeeinrichtung ist beispielsweise in der zum Zeitpunkt des Anmeldetags der vorliegenden Patentanmeldung noch nicht veröffentlichten Druckschrift mit dem Aktenzeichen 15193294.4 offenbart.

Desweiteren ist die mechanische Stabilität des Elektrodenverbundes aus Anode, Separator und Kathode dadurch, dass die Hohlräume mit elektrisch isolierendem Material aufgefüllt sind, deutlich erhöht und der Elektrodenverbund kann nicht leicht deformiert werden. Dadurch ist die Batteriezelle beispielsweise langlebig und stabil. Auch unter ungewollten äußeren Einflüssen, wie beispielsweise einem Unfall oder beim Nagelpenetrationstest bietet das elektrisch isolierende Material zusätzlichen Schutz, da es die Kathoden- und Anodenträgerfolie auf Abstand voneinander hält.

Weitere vorteilhafte Ausführungsformen der vorliegenden Batteriezelle ergeben sich aus den Unteransprüchen.
In einer Ausführungsform ist das elektrisch isolierende Material ein Kunststoff, beispielsweise ein Polyethylenterephthalat, ein Polyamid, ein Polyetheretherketon oder ein Polypropylen. Vorteilhaft hierbei ist, dass die Schmelztemperatur der genannten Kunststoffe höher ist als die Betriebstemperatur der Batteriezelle, wodurch die Sicherheit der Batteriezelle gewährleitet ist.

In einer weiteren vorteilhaften Ausführungsform weisen die zusammenhängenden Kathoden-Aktivmaterial-Bereiche und/oder die zusammenhängenden Anoden-Aktivmaterial-Bereiche einen wiederkehrenden Umriss auf. Vorteilhaft hierbei ist, dass durch einen wiederkehrenden Umriss
zum einen die Herstellung der Aktivmaterial-Bereiche sehr einfach ist und das gleiche Werkzeug bzw. die gleiche Maschine dafür verwendet werden kann. Desweiteren ist es mit einem wiederkehrenden Umriss der Aktivmaterial-Bereiche einfach eine gleichmäßige Anordnung dieser auf der jeweiligen Trägerfolie zu realisieren.
Es ist beispielsweise vorteilhaft, wenn der wiederkehrende Umriss in Form
runder, dreieckiger oder rechteckiger, insbesondere quadratischer Anoden-Aktivmaterial-Bereiche und/oder Kathoden-Aktivmaterial-Bereiche realisiert ist. Durch derartige Umrisse kann eine gleichmäßige Anordnung der Aktivmaterial-Bereiche auf der jeweiligen Trägerfolie gewährleistet werden, sodass die Wahrscheinlichkeit hoch ist, dass bei einem Nageldurchstoß sowohl Aktivmaterialbereiche als auch mit elektrisch isolierendem Material verfüllte Hohlräume getroffen werden.

In einer vorteilhaften Ausführungsform wird das strukturierte Kathoden-Aktivmaterial und/oder das strukturierte Anoden-Aktivmaterial mittels Siebdruck auf eine Anodenfolie und/oder eine Kathodenfolie aufgebracht. Vorteilhaft hierbei ist, dass die Menge sowie die Strukturierung des aufzubringenden Aktivmaterials bei diesem Verfahren variierbar ist. Desweiteren ist das Siebdruckverfahren ist auch bei hohen Stückzahlen wirtschaftlich lohnenswert.

In einer weiteren Ausführungsform ist es vorteilhaft, wenn die Hohlräume 25% der mit Anoden-Aktivmaterial und/oder Kathoden-Aktivmaterial beschichteten Fläche einnehmen. Bei 25% Flächenanteil der Hohlräume ist eine optimale Verteilung von Aktivmaterial-Bereichen und Hohlräumen erreicht, da die Hohlräume klein genug sind um den Verlust der Kapazität der Batteriezelle durch fehlende Aktivmaterial-Bereiche gering zu halten und dennoch zu gewährleisten, dass genügend Hohlräume vorhanden sind, um diese bei einem Nagedurchstoß mit hoher Wahrscheinlichkeit mitunter zu treffen.

In einer besonders vorteilhaften Ausführungsform sind die einzelnen Anodenlagen und/oder Kathodenlagen der Batteriezelle derart angeordnet, dass die Anoden-Aktivmaterial-Bereiche und/oder Kathoden-Aktivmaterial-Bereiche versetzt zueinander liegen. Hierbei sind beispielsweise die Anodenlagen versetzt zu den Kathodenlagen angeordnet, sodass die zusammenhängenden Anoden-Aktivmaterial-Bereiche und die zusammenhängenden Kathoden-Aktivmaterial-Bereiche versetzt zueinander liegen. Alternativ oder zusätzlich sind zumindest zwei Anodenlagen versetzt zueinander angeordnet und/oder zumindest zwei Kathodenlagen versetzt zueinander angeordnet, sodass die Anoden-Aktivmaterial-Bereiche verschiedener Anodenlagen und/oder die Kathoden-Aktivmaterial-Bereiche verschiedener Kathodenlagen versetzt zueinander angeordnet sind. Weiterhin alternativ sind alle Elektrodenlagen willkürlich angeordnet, sodass die Anoden- und Kathoden-Aktivmaterial-Bereiche willkürlich überlappen oder versetzt zueinander angeordnet sind. Wenn die einzelnen Anodenlagen und/oder Kathodenlagen der Batteriezelle derart angeordnet sind, dass die Anoden-Aktivmaterial-Bereiche und/oder Kathoden-Aktivmaterial-Bereiche versetzt zueinander liegen ergibt sich der Vorteil, dass die einzelnen Elektrodenlagen an jedem Punkt des Elektrodenensembles eine unterschiedliche Hohlraum zu Aktivmaterial-Bereich-Verteilung aufweisen. Auf diese Weise ist die Wahrscheinlichkeit, dass der Nagel sowohl Aktivmaterialbereiche als auch verfüllte Hohlräume durchstößt sehr hoch und der elektrische Widerstand somit ebenfalls erhöht, wodurch sich die oben genannten Vorteile ergeben. Wenn beispielsweise ein Nagel beim Nagelpenetrationstest in das Elektrodenensemble eindringt, so ist beispielsweise in einer Elektrodenlage der Aktivmaterial-Bereich durchstoßen, in einer anderen Elektrodenlage ist der mit elektrisch isolierendem Material aufgefüllte Bereich durchstoßen und beispielsweise in einer weiteren Elektrodenlage grenzt der Nagel an einen Aktivmaterial-Bereich und an einen aufgefüllten Hohlraum an. Vorteilhaft hierbei ist, dass sich keine flächigen Bereiche über die Elektrodenlagen hinweg ergeben, in denen beispielsweise auf der einen Seite des Nagels nur Aktivmaterial-Bereiche beschädigt sind und auf der anderen Seite des Nagels nur aufgefüllte Hohlräume beschädigt sind, sondern die beschädigten Aktivmaterial-Bereiche und aufgefüllten Hohlräume sich gleichmäßig auf allen Seiten des Nagels abwechseln. Dadurch ergibt sich eine sehr gleichmäßige Verteilung des Stromflusses an den beschädigten Stellen, da der elektrische Widerstand an keiner Stelle auf einen sehr niedrigen Wert abfällt.

### Kurze Beschreibung der Figuren

Es zeigen:
- Figur 1: eine herkömmliche Elektrode nach dem Stand der Technik,
- Figur 2a: eine schematische Darstellung einer Elektrode einer erfindungsgemäßen Batteriezelle,
- Figur 2b: die Elektrode gemäß Figur 2a in einem Querschnitt entlang der Schnittlinie A-A',
- Figur 2c: eine schematische Darstellung einer ersten Variante zu der in Figur 2a dargestellten Elektrode,
- Figur 2d: eine schematische Darstellung einer zweiten Variante zu der in Figur 2a dargestellten Elektrode,
- Figur 2e: eine schematische Darstellung einer dritten Variante zu der in Figur 2a dargestellten Elektrode,
- Figur 3: eine schematische Darstellung eines Querschnitts durch ein Elektrodenensemble gemäß dem Stand der Technik beim Nagelpenetrationstest,
- Figur 4a: eine schematische Darstellung eines Querschnitts durch ein Elektrodenensemble einer erfindungsgemäßen Batteriezelle beim Nagelpenetrationstest in einer ersten Ausführungsform, und
- Figur 4b: eine schematische Darstellung eines Querschnitts durch ein Elektrodenensemble einer erfindungsgemäßen Batteriezelle beim Nagelpenetrationstest in einer zweiten Ausführungsform.

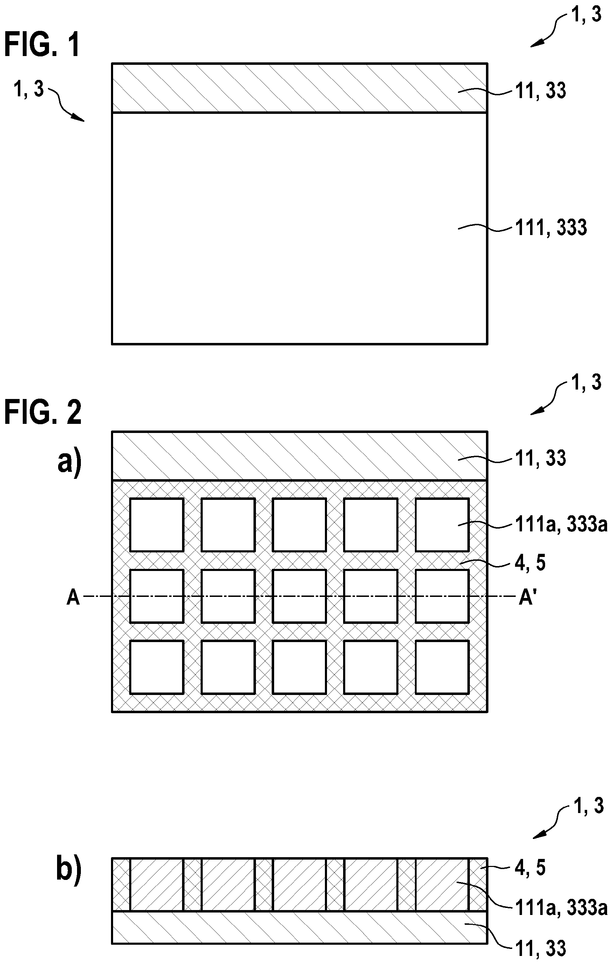

Figur 1 zeigt eine Elektrode gemäß dem Stand der Technik. Die Elektrode ist beispielsweise eine Anode 1 oder eine Kathode 3. Die Anode 1 bzw. Kathode 3 umfasst eine Anoden-Trägerfolie 11 bzw. Kathoden-Trägerfolie 33, welche teilweise flächig mit einem Anoden-Aktivmaterial 111 bzw. einem Kathoden-Aktivmaterial 333 beschichtet ist. Der Bereich der Anoden-Trägerfolie 11 bzw. Kathoden-Trägerfolie 33, welcher keine Beschichtung aufweist dient zur elektrischen Kontaktierung der jeweiligen Elektrode und wird beispielsweise an einen Stromableiter angeschweißt.

Figur 2a zeigt eine Elektrode einer erfindungsgemäßen Batteriezelle. Im Unterschied zu der herkömmlichen Elektrode gemäß Figur 1 ist das Anoden-Aktivmaterial 111 bzw. das Kathoden-Aktivmaterial 333 nicht flächig auf die Anoden-Trägerfolie 11 bzw. die Kathoden-Trägerfolie 33 aufgebracht sondern bereichsweise, sodass sich Hohlräume 4 zwischen zusammenhängenden Kathoden-Aktivmaterial-Bereichen 333a bzw. zwischen zusammenhängenden Anoden-Aktivmaterial-Bereichen 111a befinden. Die Hohlräume 4 sind mit einem elektrisch isolierenden Material 5 aufgefüllt. Das elektrisch isolierende Material 5 umfasst beispielsweise ein Polyethylenterephthalat, ein Polyamid, ein Polyetheretherketon oder ein Polypropylen.

In einer alternativen, nicht dargestellten Ausführungsform sind die Hohlräume 4 nur weilweise mit einem elektrisch isolierenden Material 5 ausgefüllt. Der Umriss der Kathoden-Aktivmaterial-Bereiche 333a bzw. Anoden-Aktivmaterial-Bereiche 111a ist quadratisch und die quadratischen Kathoden-Aktivmaterial-Bereiche 333a bzw. Anoden-Aktivmaterial-Bereiche 111a sind in gleichmäßigen Abständen auf der Kathoden-Trägerfolie 33 bzw. Anoden-Trägerfolie 11 angeordnet. Alternativ ist der Umriss der Kathoden-Aktivmaterial-Bereiche 333a bzw. Anoden-Aktivmaterial-Bereiche 111a rechteckig ausgebildet.

In Figur 2b ist die Elektrode gemäß Figur 2a in einem Querschnitt entlang der Schnittlinie A-A' dargestellt.

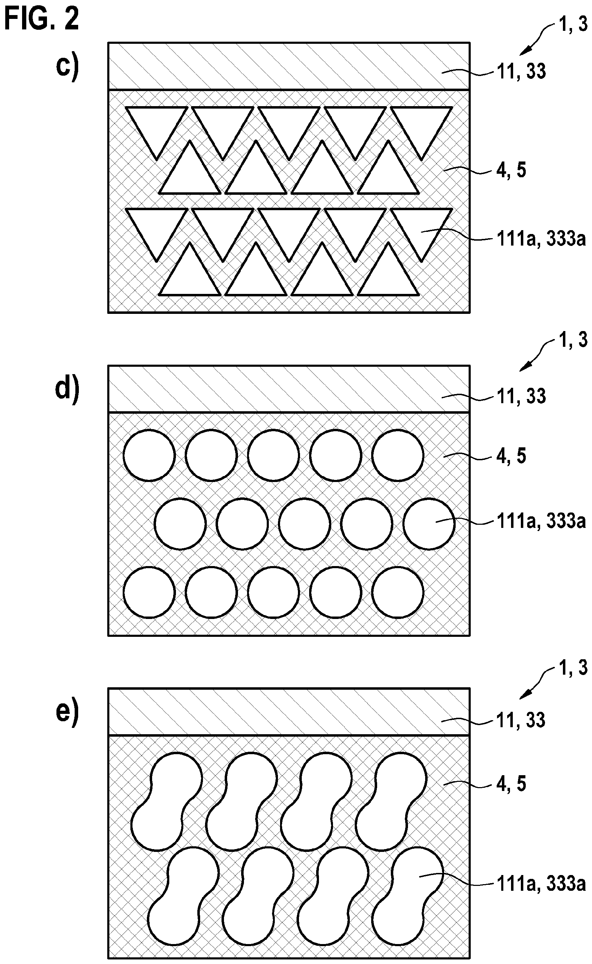

In Figur 2c ist eine erste Variante zu der in Figur 2a dargebotenen Elektrode dargestellt. Im Unterschied zu Figur 2a sind die Kathoden-Aktivmaterial-Bereiche 333a der Kathode 3 bzw. die Anoden-Aktivmaterial-Bereiche 111a der Anode 1 nicht quadratisch sondern dreieckig ausgebildet.

In Figur 2d ist eine zweite Variante zu der in Figur 2a dargebotenen Elektrode dargestellt. Im Unterschied zu Figur 2a sind die Kathoden-Aktivmaterial-Bereiche 333a der Kathode 3 bzw. die Anoden-Aktivmaterial-Bereiche 111a der Anode 1 nicht quadratisch sondern rund ausgebildet.

In Figur 2e ist eine dritte Variante zu der in Figur 2a dargebotenen Elektrode dargestellt. Im Unterschied zu Figur 2a sind die Kathoden-Aktivmaterial-Bereiche 333a der Kathode 3 bzw. die Anoden-Aktivmaterial-Bereiche 111a der Anode 1 nicht quadratisch sondern mit einer freien Form ausgebildet. Die in Figur 2e abgebildete Form soll ein Beispiel für jede willkürliche Form darstellen.

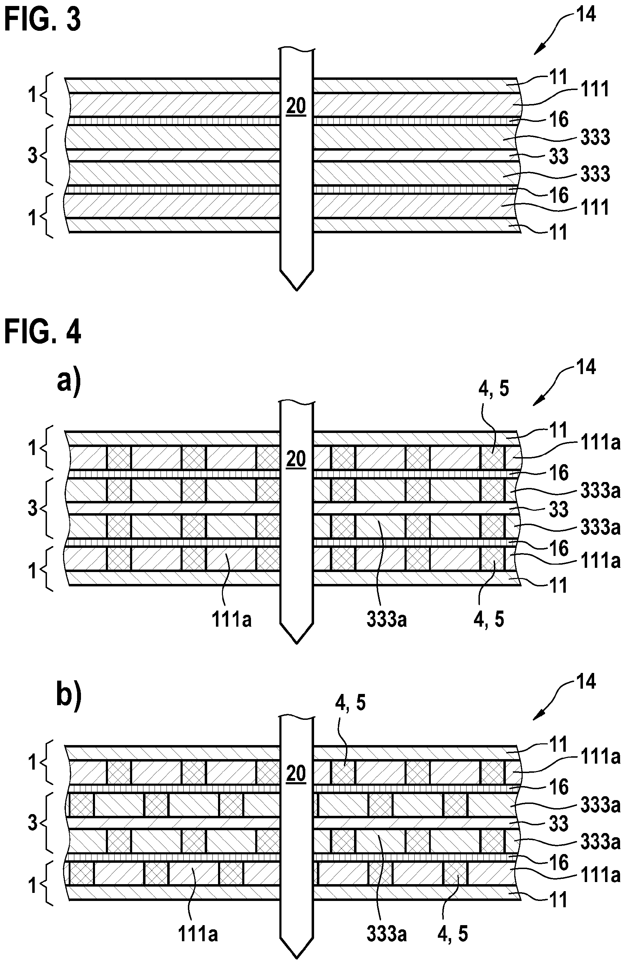

In Figur 3 ist ein Elektrodenensemble 14 gemäß Stand der Technik offenbart. Das Elektrodenensemble 14 umfasst eine Kathoden-Trägerfolie 33, welche beidseitig mit einem Kathoden-Aktivmaterial 333 beschichtet ist. Auf die der Kathoden-Trägerfolie 33 abgewandten Seiten der Schichten des Kathoden-Aktivmaterials 333 ist jeweils ein Separator 16 aufgebracht. Auf die dem Kathoden-Aktivmaterial 333 abgewandten Seiten der Separatoren 16 ist jeweils ein Anoden-Aktivmaterial 111 aufgebracht. Auf die den Separatoren 16 abgewandten Seiten des Anoden-Aktivmaterials 111 ist jeweils eine Anoden-Trägerfolie 11 aufgebracht. In einer nicht dargestellten Ausführungsform umfasst das Elektrodenensemble 14 weitere Schichten, beispielsweise weitere Schichten des Anoden-Aktivmaterials 111 auf der Anoden-Trägerfolie 11.
Die Kathoden-Trägerfolie 33 und die Schichten des Kathoden-Aktivmaterials 333 bilden die Kathode 3, die Anoden-Trägerfolien 11 und die Schichten des Anoden-Aktivmaterials 111 bilden die Anode 1. In Figur 3 ist in genannter Reihenfolge auf eine Anode 1 eine Kathode 3 gestapelt und auf die Kathode 3 ist wiederum eine weitere Anode 1. gestapelt. Dies ist nur beispielhaft dargestellt, es können weitere Anoden 1 und Kathoden 3 aufeinander gestapelt vorliegen oder jeweils nur eine Anode 1 und eine Kathode 3. Jeweils zwischen einer Anode 1 und einer Kathode 3 ist ein Separator 16 eingebracht. Dieser dient zur räumlichen und elektrischen Trennung der Elektroden 1,3. In Figur 3 ist das Elektrodenensemble 14 von einem Nagel 20 durchstoßen. Dies stellt eine kritische Situation dar und führt zu ungewollten Reaktionen wie sie bereits in der Offenbarung der Erfindung beschrieben sind.

In Figur 4a ist ein Elektrodenensemble 14 einer erfindungsgemäßen Batteriezelle in einer ersten Ausführungsform dargestellt. Im Unterschied zu Figur1 sind das Anoden-Aktivmaterial 111 und das Kathoden-Aktivmaterial 333 nicht flächig auf die Anoden-Trägerfolie 11 und die Kathodenträgerfolie 33 aufgebracht sondern wie in Figur 2 bereichsweise, sodass sich Hohlräume 4 zwischen zusammenhängenden Kathoden-Aktivmaterial-Bereichen 333a und zwischen zusammenhängenden Anoden-Aktivmaterial-Bereichen 111a befinden. Die Hohlräume 4 sind mit einem elektrisch isolierenden Material 5 aufgefüllt. Die mit elektrisch isolierendem Material 5 aufgefüllten Hohlräume 4 der Schichten der Anoden 1 und der Kathode 3 sind in Figur 4a direkt übereinander gelegen. Ebenso sind die Kathoden-Aktivmaterial-Bereiche 333a und die Anoden-Aktivmaterialbereiche 111a direkt übereinander gelegen. Der Nagel 20 durchstößt das Elektrodenensemble 14 in Figur 4a derart, dass dieser sowohl an übereinander gelegene Kathoden-Aktivmaterial-Bereiche 333a und Anoden-Aktivmaterial-Bereiche 111a grenzt, als auch an übereinander gelegene mit elektrisch isolierendem Material 5 aufgefüllte Hohlräume 4 der Elektroden 1,3. Somit sind nicht nur für die Funktionsweise der Batteriezelle wichtige Kathoden-Aktivmaterial-Bereiche 333a und Anoden-Aktivmaterialbereiche 111a beschädigt, sondern auch für die Funktionsweise der Batteriezelle unwichtige Bereiche, nämlich die mit elektrisch isolierendem Material 5 aufgefüllten Hohlräume 4. Die sich hieraus ergebenden Vorteile und Verbesserungen zu herkömmlichen Batteriezellen sind bereits in der Offenbarung der Erfindung beschrieben.

In Figur 4b ist ein Elektrodenensemble 14 einer erfindungsgemäßen Batteriezelle in einer zweiten Ausführungsform dargestellt. Im Unterschied zu der in Figur 4a dargestellten ersten Ausführungsform sind die mit elektrisch isolierendem Material 5 aufgefüllten Hohlräume 4 der Schichten der Anoden 1 und der Kathode 3 nicht übereinander gelegen sondern versetzt zueinander. Ebenso sind die Kathoden-Aktivmaterial-Bereiche 333a und die Anoden-Aktivmaterialbereiche 111a nicht übereinander gelegen sondern versetzt zueinander. In Figur 4b ist jede zweite Elektrodenlage mit Elektroden-Aktivmaterial-Bereichen 111a, 333a übereinandergelegen, sodass sich ein regelmäßiges Versatzmuster bildet.
Der Nagel 20 durchstößt das Elektrodenensemble 14 in Figur 4b derart, dass dieser sowohl an Kathoden-Aktivmaterial-Bereiche 333a als auch an Anoden-Aktivmaterial-Bereiche 111a grenzt, sowie an mit elektrisch isolierendem Material 5 aufgefüllte Hohlräume 4 der Elektroden 1,3.
In einer alternativen, nicht dargestellten Ausführungsform ist der Versatz nicht in jeder zweiten Elektrodenlage, sondern in jeder n-ten Elektrodenlage ausgeführt, wobei das n für eine beliebige Zahl steht.
In einer alternativen, nicht dargestellten Ausführungsform sind die Anoden-Aktivmaterial-Bereiche 111a versetzt zu den Kathoden-Aktivmaterial-Bereichen 333a angeordnet.
In einer weiteren nicht dargestellten Ausführungsform weisen die Anoden-Aktivmaterial-Bereiche 111a und die Kathoden-Aktivmaterial-Bereiche 333a nicht die gleiche Länge auf, sodass sich dadurch ein Versatz ergibt. Weiterhin alternativ oder zusätzlich sind die Aktivmaterial-Bereiche 111a, 333a einer einzigen Elektrodenlage nicht gleich lang ausgeführt.
In einer weiteren nicht dargestellten Ausführungsform sind alle Elektrodenlagen willkürlich angeordnet, sodass die Elektroden-Aktivmaterial-Bereiche 111a, 333a willkürlich überlappend angeordnet sind.
In allen Ausführungsformen sind nicht nur für die Funktionsweise der Batteriezelle wichtige Kathoden-Aktivmaterial-Bereiche 333a und Anoden-Aktivmaterialbereiche 111a beschädigt, sondern auch für die Funktionsweise der Batteriezelle unwichtige Bereiche, nämlich die mit elektrisch isolierendem Material 5 aufgefüllte Hohlräume. Die sich hieraus ergebenden Vorteile und Verbesserungen zu herkömmlichen Batteriezellen sind bereits in der Offenbarung der Erfindung beschrieben.

## Patentansprüche

1. Batteriezelle, insbesondere Lithium-Ionen-Batteriezelle, mit einer Kathode (3), umfassend ein Kathoden-Aktivmaterial (333) und mit einer Anode (1), umfassend ein Anoden-Aktivmaterial (111), **dadurch gekennzeichnet, dass** das Kathoden-Aktivmaterial (333) und/oder das Anoden-Aktivmaterial (111) derart strukturiert ist, dass sich Hohlräume (4) zwischen zusammenhängenden Kathoden-Aktivmaterial-Bereichen (333a) und/oder zwischen zusammenhängenden Anoden-Aktivmaterial-Bereichen (111a) befinden, welche die zusammenhängenden Kathoden-Aktivmaterial-Bereiche (333a) und/oder die zusammenhängenden Anoden-Aktivmaterial-Bereiche (111a) räumlich voneinander trennen, und dass die Hohlräume (4) zumindest teilweise mit einem elektrisch isolierenden Material (5) aufgefüllt sind.

2. Batteriezelle nach Anspruch 1, **dadurch gekennzeichnet, dass** das elektrisch isolierende Material (5) ein Polyethylenterephthalat, ein Polyamid, ein Polyetheretherketon oder ein Polypropylen ist.

3. Batteriezelle nach einem der vorhergehenden Ansprüche, **dadurch gekennzeichnet, dass** die zusammenhängenden Kathoden-Aktivmaterial-Bereiche (333a) und/oder die zusammenhängenden Anoden-Aktivmaterial-Bereiche (111a) einen wiederkehrenden Umriss aufweisen.

4. Batteriezelle nach Anspruch 3, **dadurch gekennzeichnet, dass** der wiederkehrende Umriss in Form runder, dreieckiger oder rechteckiger, insbesondere quadratischer Anoden-Aktivmaterial-Bereiche (111a) und/oder Kathoden-Aktivmaterial-Bereiche (333a) realisiert ist.

5. Batteriezelle nach einem der vorhergehenden Ansprüche, **dadurch gekennzeichnet, dass** die Kathoden-Aktivmaterial-Bereiche (333a) und oder die Anoden-Aktivmaterial-Bereiche (111a) mittels Siebdruck auf eine Anoden-Trägerfolie (11) und/oder eine Kathoden-Trägerfolie (33) aufgebracht sind.

6. Batteriezelle nach einem der vorhergehenden Ansprüche, **dadurch gekennzeichnet, dass** die Hohlräume (4) 25% der mit Anoden-Aktivmaterial (111) und oder Kathoden-Aktivmaterial (333) beschichteten Fläche einnehmen.

7. Batteriezelle nach einem der vorhergehenden Ansprüche, **dadurch gekennzeichnet, dass** einzelne Anodenlagen und/oder Kathodenlagen der Batteriezelle derart angeordnet sind, dass die Anoden-Aktivmaterial-Bereiche (111a) und/oder Kathoden-Aktivmaterial-Bereiche (333a) versetzt zueinander liegen.

8. Batterie umfassend zumindest eine Batteriezelle nach einem der Ansprüche 1-7

9. Verwendung einer Batterie nach Anspruch 8 in einem Elektrofahrzeug, in einem Hybridfahrzeug oder in einem Plug-In-Hybridfahrzeug.
